# EUROPEAN PATENT SPECIFICATION

(11) **EP 1 122 466 B1**
(45) Date of publication and mention of the grant of the patent: **09.06.2004**
(21) Application number: 00200329.1
(22) Date of filing: 01.02.2000
(51) Int. Cl.: F16H 57/08, F16H 1/28

(54) **A planetary gearset having a gearwheel connected cage and a continuously variable transmission provided therewith**
Planetengetriebe mit Planetenradkäfig sowie damit versehenes stufenloses Getriebe
Train épicycloidal avec cage de satellites et variateur continu de vitesse ainsi equipée

(43) Date of publication of application: 08.08.2001
(73) Proprietor: Van Doorne's Transmissie B.V., 5026 RA Tilburg (NL)
(72) Inventor: Van Spijk, Johannes Gerardus Ludovicus Maria, 5151 VT Drunen (NL); Scholten, Stephanus Petrus Wilmelmus, 5062 HB Oisterwijk (NL)

(56) References cited:
- EP-A- 0 233 532
- EP-A- 0 271 416
- GB-A- 725 364
- US-A- 4 187 740
- US-A- 4 998 909

## Description

The present invention concerns a planetary gearset provided with planetary wheels, a ring wheel and planetary wheels drive means holding first ends of respective rotation shafts of the planetary wheels, which planetary gearset is provided with a cage, which cage is fastened to the planetary wheels drive means.

The present invention also concerns a transmission, such as a continuously variable transmission which is provided with such a planetary gearset.

Such a planetary gearset is generally known from its application in the driveline of automotive vehicles, in particular from EP-A-0271416. It comprises a sun wheel surrounded by a set of planetary wheels engaging the sun wheel and a gearwheel, otherwise denoted ring wheel or annulus. The annulus has internal teeth for engagement with outer teeth of the set of planetary wheels. The planetary wheels may be a set of 1 or 2. If the set of planetary wheels is being driven, the rotation direction of the sun wheel can be influenced by either or not coupling the gearwheel to the fixed environment in the driveline, usually by means of a plate coupling. Such a planetary gearset is applied extensively for reversing the rotation direction of for example vehicles or, more extended, the course of a mechanical load process.
Now more specifically looking at the structure of forces and the direction of the forces that are implied by in particular the planetary wheels in the gearset, it appears that disadvantageously the forces applied in axial direction of the planetary wheels, are opposite. This results from opposite rotation directions of these wheels and depends on their possible oblique or helical arrangement of teeth on the wheels. This preferred oblique arrangement of teeth on the planetary wheels maintain a continuous meshing contact of the teeth and reduces meshing noise. In practice a special construction is applied to convey and take up the axial forces produced by the planetary wheels. This special construction relies on supporting the axial forces to the environment and is also in sliding -generally beared- contact with the planetary wheels, which exsert these axial forces. Relatively complicated constructions within the transmission design are required for realising such a special construction.

Such a complicated construction also poses a severe constructional burden on the assembling and disassembling process of a planetary gearset, as well as on a vehicle provided with such a planetary gearset.
Therefore it is an object of the present invention to provide in particular a planetary gearset, that allows conveyance of axial forces in a manner that overcomes, but at least reduces said disadvantages of complexity in construction and assembly.

Thereto the planetary gearset according to the present invention is characterised in that the planetary gearset is provided with a cage, which cage is fastened to the planetary wheels drive means, and which cage is is provided with an inner circumferential groove, a clamping means partly falling in the groove and a cage ring at least partly preventing the ringwheel from moving axially.

In a further embodiment the planetary gearset according to the present invention is characterised in that the planetary gearset is provided with a cage, which cage is fastened to the planetary wheels drive means, and which cage is coupled to the second ends of said rotation shafts of the planetary wheels for taking up axial forces generated by the planetary wheels.

It is an advantage of the planetary gearset embodiments according to the present invention that they may function as a self contained component, and allow for pre-construction and pre-assembly of the gearset as a whole, without substantial added material costs. The thus easily manufactured pre-assembled gearsets can simply be inserted in a vehicle and be built together with the remainder of the driving means. The latter may include a drive coupling, an engine, a variable transmission, such as a continuously variable belt transmission, and a differential set. In addition the invention proposes a cremona of forces which is closed in itself. Moreover the cremona is closed in the direct vicinity of the planetary gearset, such that these forces do not have to be conveyed to the outside world or to a housing of the gearset, but are closed within and through the cage. This is in particular true when the vehicle is driven in reverse direction.

A preferred embodiment of the planetary gearset according to the present invention is characterised in that the cage is provided with an inner circumferential groove and that the clamping means are formed as a clamping ring partly falling in the groove and locking the supporting ring against axial movement. Advantageously this is a easy to manufacture and light weight embodiment, which can assembled and disassembled without excessive skill in the art of motoring technic being necessary thereto.

A further preferred embodiment of the planetary gearset according to the invention is characterised in that the cage, while provided with the planetary wheels, is arranged to be mounted as a unit in the planetary gearset. Advantageously post-adjustment of the planetary gearset is avoided, because the gearset as is, can now be pre-assembled. In addition this simplifies the construction, mounting, dismounting and independent assembly and disassembly of the transmission as a whole.

A still further embodiment of the planetory gearset according to the invention is characterised in that in axial direction part of the cage is essentially battlement-shaped, in particular having easy to manufacture longitudinal protrusions, whose outer ends are fixedly connected to the planetary wheels drive means, such as by welding.

Further preferred embodiments and related subjects of the present invention are specified in the remaining subclaims.

At present the planetary gearset and transmission, as well as related subjects according to the invention will be elucidated further together with their additional advantages while reference is being made to the appended drawing, whereby similar elements in the different figs. of the drawing are provided with the same reference numerals. In the drawing:
Fig. 1 shows a general outline of a prior art continuously variable transmission;
Fig. 2 shows a schematical view of a cage, which is part of a planetary gearset according to the present invention;
Fig. 3 shows a cross sectional view of a part of the cage of fig. 2 provided in the planetary gearset according to the present invention;
Fig. 4 shows a detailed embodiment of the cage of fig. 2, including a ring for application therein; and
Fig. 5 shows a cross sectional view of an assembled implementation of the planetary gearset provided with the cage.

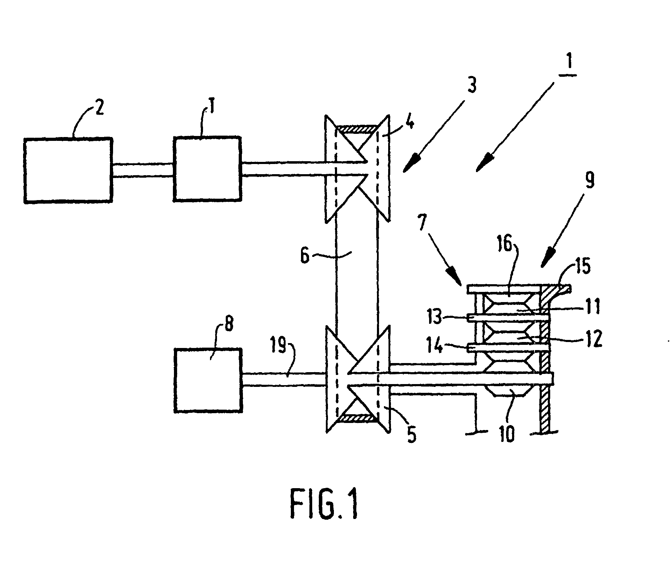

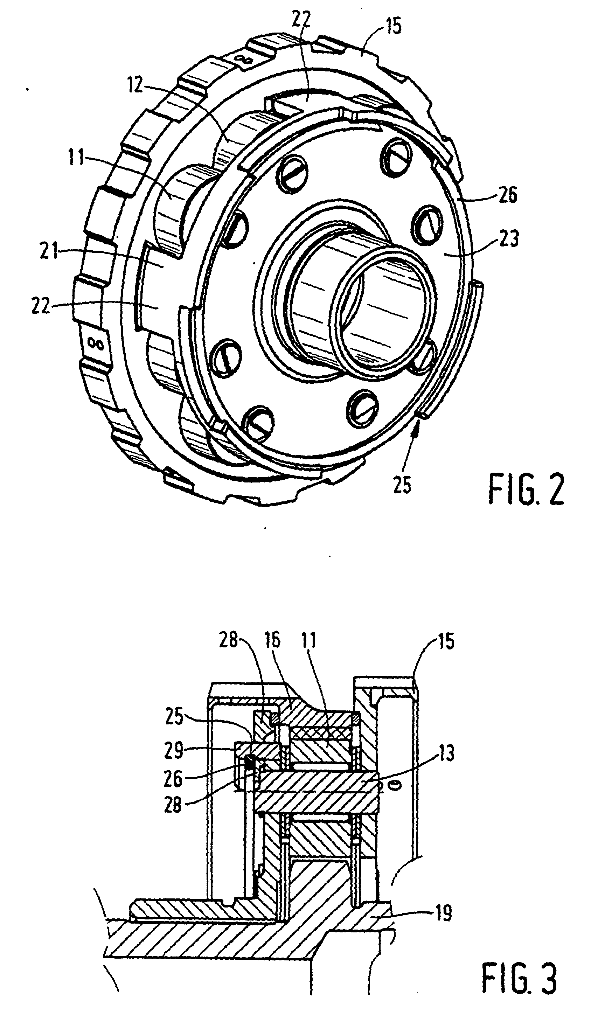

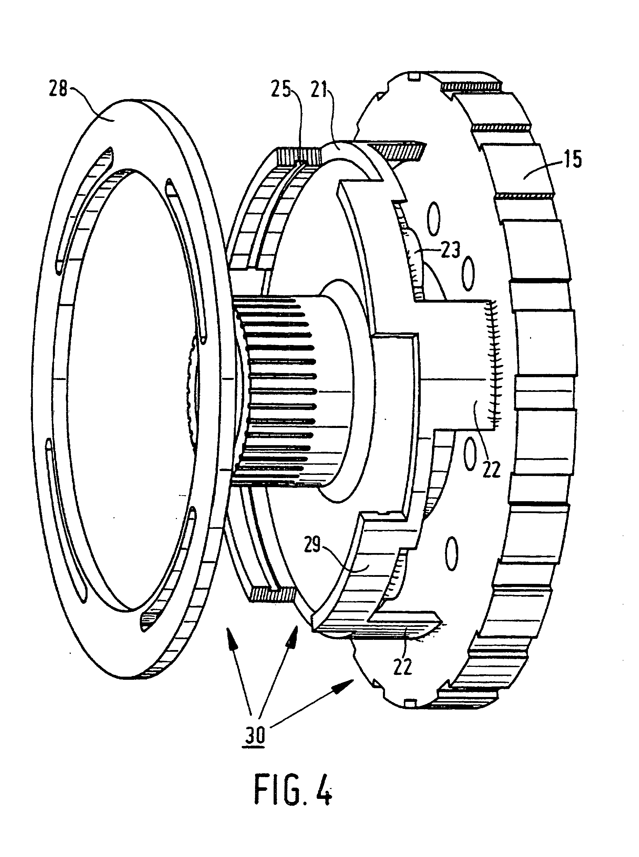

Fig. 1 shows a prior art transmission 1 comprising an engine 2, such as a combustion engine, possibly coupled to a torque convertor T, a variator 3 having a primary discpair 4 and a secondary discpair 5 mutually coupled by an endless transmission belt 6, a so called DNR (Drive-Neutral-Reverse) set 7 and a coupling and differential mechanism 8 to be coupled to for example wheels of a vehicle (not shown). The DNR set 7 comprises a schematically shown planetary gearset 9 having a sunwheel 10, surrounded by for example four single planetary wheels 11 or pairs of engaging planetary wheels 11-12, as only depicted in figs 1 and 2, which planetary wheels are in interlocking relation with the sunwheel 10. Each planetary wheelpair 11 and/or 12 has associated shafts 13-14, which are beared at first ends in a planet carrier 15 (see figs 1-5). The planetary gearwheels 11-12 are also in interlocking relation with inner teeth of an outer ringwheel, annulus or gearwheel 16.

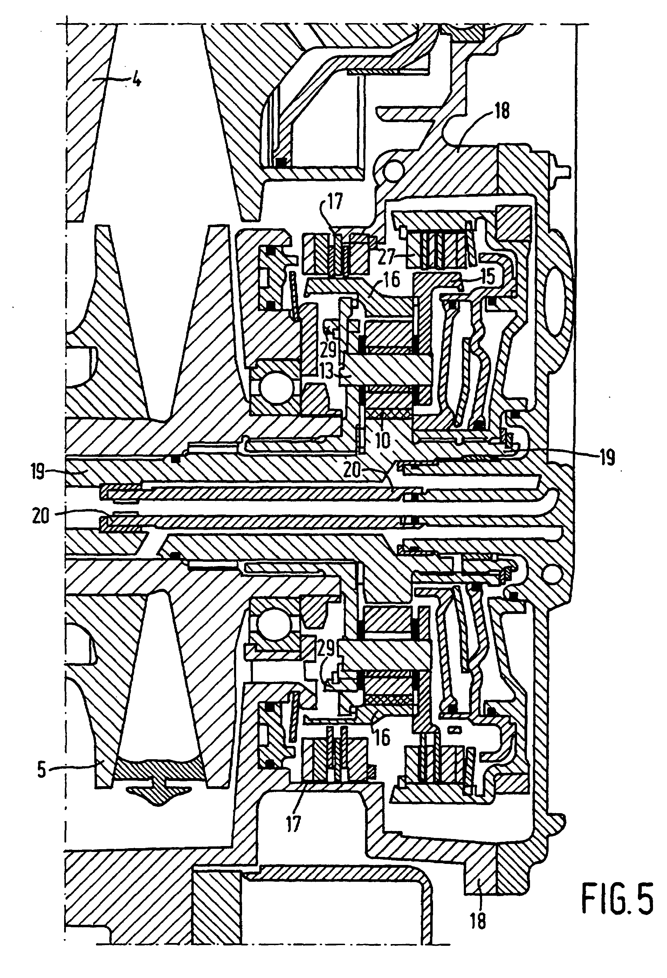

As shown in fig. 5 a controllable brake 17 generally embodied by a clutch is provided between the fixed environment 18 and said ringwheel 16. A clutch 27 is provided between the planet carrier 15 and the sunwheel 10. A hollow outer shaft 19 is drivingly connected between the differential mechanism 8 at one end and the sunwheel 10 at its other end. Coaxial within the hollow outer shaft 19 there is an inner shaft 20 beared within the outer shaft 19.

The operation of the transmission system described thus far is as follows. In open state of the brake 17 and in closed state of the clutch 27 the secondary discpair 5 drives planet carrier 15 resulting in a forward driving rotation of sunwheel 10 and outer shaft 19 to differential mechanism 8. So in forward driving direction the DNR set 7 does not transfer a speed ratio. Conversely, if the brake 17 is in closed state and clutch 27 is open, then a driving of the secondary discpair 5 results in a reverse driving rotation of sunwheel 10 and thus of the outer shaft 19. This reverse driving results in axial forces being exserted by the planetary wheels 11 and/or 12 -and ringwheel 16- in case these wheels 11 and 12 have helical teethes, which they usually have in order to reduce noise produced by mutually engaging teethes. This exsertion of axial forces holds when the vehicle is driving in reverse direction, but also when coasting in reverse direction, when the vehicle drives the transmission. Those exserted axial force components are directed along the planetary wheels shaft 13, 14 and away from the planet carrier 15. These axial forces are taken up by a cage, which will be elucidated hereunder.

Figs. 2-5 show that the planetary gearset 9 is provided with a cage 30, assembled from a cage part 21, a drive side cage part 23, part of the planet carrier 15, which is the clutch side cage part, and a cage ring 28. The cage part 21 is fixed to the side of planet carrier 15 at the ends of provided longitudinal protrusions 22 and is fixed to cage part 23 by for example circumferencial welding. The fixation can take place by means of for example glueing, welding or by any other suitable fixing means. Possibly annular holes can be made in the side of planet carrier 15 in order to fix the protrusions 22 therein. The cage part 21 as shown here is battlement shaped seen in axial direction and has protrusions 22 and 29 on opposite sides. Openings formed between neighbouring protrusions 22 accommodate space for the planetary wheels 11 and/or 12 and for engagement thereof with the ringwheel 16 inner teeth. As noted above first ends of the shafts 13 and/or 14 are beared against the clutch side cage part, which is formed by planet carrier 15. Second ends of the respective shafts 13-14 are beared against the cage part 23. The cage ring 28 is also coupled to the cage part 21, so that the axial force emanating from rotation of the ringwheel 16 is passed on to the cage part 21. The cage part 21 in particular the protrusions 29 are provided with an inner circumferential groove 25 and a detachable clamping or coupling ring 26 which partly falls in the groove 25 locking the cage ring 28 against axial movement to the left or to the right in fig. 3. Similarly the ringwheel 16 is effectively locked against mutually opposite axial movements between the cage ring 28 and the planet carrier 15.

## Claims

1. A planetary gearset provided with planetary wheels and planetary wheels drive means (15) holding first ends of respective rotation shafts (13) of the planetary wheels (11, 12) and an outer ring wheel (16), which planetary gear set is provided with a cage (21), which cage (21) is fastened to the planetary wheels drive means (15),
**characterised in that** the cage (21) is provided with an inner circumferential groove (25), a cage ring (28) for passing on axial forces generated by the planetary wheels (11, 12) or the ring wheel (16) to the drive means (15) and a clamping means (26) partly falling in the groove (25) that locks the said cage ring (28) against axial movement.

2. A planetary gearset according to claim 1, **characterised in that** the said cage ring (28) is provided with openings for receiving axially extending battlement shaped portions (29) of the cage (21).

3. The planetary gearset according to claim 1 or 2, **characterised in that** the cage (21) is provided with longitudinal protrusions (22), whose outer ends are fixedly connected to the planetary wheels drive means (15).

4. The planetary gearset according to claim 1, 2 or 3, **characterised in that** the cage (21) is provided with circumferential openings for accommodating the planetary wheels (11, 12).

5. A transmission, such as a continuously variable transmission, which is provided with a planetary gearset according to one of the claims 1-4.

## Patentansprüche

1. Planetengetriebe das mit Planetenrädern und einer Planetenräder-Antriebseinrichtung (15) versehen ist, welche die ersten Enden von betreffenden Drehwellen (13) der Planetenräder (11, 12) und ein äußeres Hohlrad (16) festhalten, wobei das Planetengetriebe mit einem Käfig (21) versehen ist, der an der Planetenräder-Antriebseinrichtung (15) befestigt ist, **dadurch gekennzeichnet, dass** der Käfig (21) mit einer inneren Umfangsnut (25), einem Käfigring (28) zur Weitergabe von axialen Kräften, die von den Planetenrädern (11, 12) oder dem Hohlrad (17) erzeugt werden, an die Antriebseinrichtung (15) und einer Klemmeinrichtung (26) versehen ist, die teilweise in die Nut (25) einfällt und den Käfigring (26) gegen eine axiale Bewegung verriegelt.

2. Planetengetriebe nach Anspruch 1, **dadurch gekennzeichnet, dass** der besagte Käfigring (28) mit Öffnungen zur Aufnahme von axial verlaufenden zinnenförmigen Bereichen (29) des Käfigs (21) versehen ist.

3. Planetengetriebe nach Anspruch 1 oder 2, **dadurch gekennzeichnet, dass** der Käfig (21) mit länglichen Vorsprüngen (22) versehen ist, deren äußere Enden mit der Planetenträger-Einrichtung (15) fest verbunden ist.

4. Planetengetriebe nach Anspruch 1, 2 oder 3 **dadurch gekennzeichnet, dass** der Käfig (21) mit Umfangsöffnungen zur Aufnahme der Planetenräder (11, 12) versehen ist.

5. Getriebe, wie bsp. ein stufenlos veränderliches Getriebe, das mit einem Planetengetriebe nach einem der Ansprüche 1 bis 4 versehen ist.

## Revendications

1. Ensemble d'engrenages planétaires comportant des pignons planétaires et des moyens d'entraînement de pignons planétaires (15) maintenant les premières extrémités des arbres de rotation respectifs (13) des pignons planétaires (11, 12), ainsi qu'une roue annulaire extérieure (16), cet ensemble d'engrenages étant muni d'une cage (21) et cette cage (21) étant fixée aux moyens d'entraînement de pignons planétaires (15), **caractérisé en ce que** la cage (21) est munie d'une rainure circonférentielle intérieure (25), d'un anneau de cage (28) pour faire passer aux moyens d'entraînement (15) les forces axiales générées par les pignons planaires (11, 12) ou la roue annulaire (16), ainsi que d'un moyen de blocage (26) tombant partiellement dans la rainure (25) pour verrouiller l'anneau de cage (28) contre tout mouvement axial.

2. Ensemble d'engrenages planétaires selon la revendication 1, **caractérisé en ce que** l'anneau de cage (28) est muni d'ouvertures destinées à recevoir des parties en forme de créneaux s'étendant axialement (29) de la cage (21).

3. Ensemble d'engrenages planétaires selon la revendication 1 ou la revendication 2, **caractérisé en ce que** la cage (21) est munie de siallies longitudinales (22) don't les extrémités extérieures sont reliées de façon fixe aux moyens d'entraînement des pignons planétaires (15).

4. Ensemble d'engrenages planétaires selon la revendication 1, 2 ou 3, **caractérisé en ce que** la cage (21) est munie d'ouvertures circonférentielles destinées à recevoir les pignons planétaires (11, 12).

5. Transmission, telle qu'une transmission à variation continue, munie d'un ensemble d'engrenages planétaires selon l'une des revendications 1 à 4.
